Europäisches Patentamt

European Patent Office

Office européen des brevets

(11) Publication number: **0 230 396**
A2

# (12) EUROPEAN PATENT APPLICATION

(21) Application number: **87630008.8**

(22) Date of filing: **20.01.87**

(51) Int. Cl.⁴: **G 05 D 16/20, F 25 B 49/00**

(30) Priority: **24.01.86 US 822160**

(43) Date of publication of application: **29.07.87 Bulletin 87/31**

(84) Designated Contracting States: **AT BE CH DE ES FR GB IT LI NL SE**

(71) Applicant: **EMERSON ELECTRIC CO., 8100 W. Florissant Avenue, St. Louis Missouri 63136 (US)**

(72) Inventor: **Palmer, Stephen George, 535 Mistletoe Lane, Kirkwood Missouri 63122 (US)**
Inventor: **Yerlikaya, Denis Yalcin, 13257 Kenroyal, Des Peres Missouri 63131 (US)**

(74) Representative: **Waxweiler, Jean et al, OFFICE DENNEMEYER S.à.r.l. P.O. Box 1502, L-1015 Luxembourg (LU)**

(54) Magnetic pilot expansion valve system and method.

(57) An expansion valve system which includes an expansion valve having an inlet port, an outlet port, and a passage between the inlet and outlet ports for fluid communication therebetween. A valve assembly is at least partially disposed in the passage between the inlet and outlet ports for controlling the amount of fluid flow between the ports, which valve assembly includes a pressure responsive control element. A magnetic pilot is included for supplying a regulated pressure differential to the pressure responsive control element, which pressure differential is substantially independent of changes in fluid pressure at the inlet and outlet ports of the expansion valve. A method of controlling the flow rate of fluid through such an expansion valve system is also disclosed.

This invention relates to a system and method for controlling the flow rate of fluid through an expansion valve in a refrigeration system or the like and, more particularly, to a magnetic pilot for controlling such an expansion valve.

Generally, a refrigeration system includes a compressor, a condenser coil, and an evaporator coil. Refrigerant vapor is compressed to a high pressure by the compressor and is conducted through the condenser coil where it is cooled to form a liquid under high pressure. This high pressure liquid is then adiabatically expanded through an expansion valve and is admitted into the evaporator coil where the refrigerant picks up heat from the surroundings of the coil. The heat transforms low pressure liquid in the evaporator coil into a vapor. The vapor is then conducted through the suction line of the refrigeration system and is returned to the inlet of the compressor.

Generally, it is not desirable that excessive liquid refrigerant be returned to the inlet of the compressor from the evaporator coil because this liquid refrigerant may dilute the lubricating oil in a typical hermetic compressor and thus cause damage to the compressor. Also, excessive quantities of liquid refrigerant in the compressor may damage certain of the compressor components, such as the compressor reed valves.

A thermostatic expansion valve has conventionally been used to regulate the flow of refrigerant through the evaporator coil so that under various operating conditions for the evaporator coil, the majority of the length of the coil will have liquid refrigerant therein, while flow is limited so as to ensure that the evaporator coil does not become flooded. In other words, the thermostatic expansion valve automatically controls the flow of refrigerant into the evaporator coil so as to maintain the superheat of the refrigerant leaving the evaporator coil at a predetermined level under various operating conditions.

In the past, it has been difficult to select a fixed superheat setting for a conventional thermostatic expansion valve which provides satisfactory control of the superheat setting at all operating conditions and under both heating and air conditioning modes. For example, such operating conditions as frost build-up on the coils, start-up after a cold soak at low ambient temperatures, and defrost recovery have been difficult to accommodate with a fixed superheat setting in a thermostatic expansion valve. Also, system component failures (e.g., failure of an evaporator or condenser fan motor) may impose even more severe demands on a thermostatic expansion valve to maintain an acceptable superheat setting so as to prevent damage to the compressor. With conventional thermostatic expansion valves, the superheat setting may only be changed by mechanically adjusting or varying the spring force exerted on the valve, or by changing the fluid in the thermostatic sensing bulb so as to exert more or less pressure on the expansion valve diaphragm at selected temperatures. However, these adjustments are not always practical or desirable.

In an attempt to overcome the above-identified shortcomings of the prior art thermostatic expansion valves, electrically operated refrigerant expansion valves, such as shown in the co-assigned U.S. Patent 3,967,781 to Kunz, have been employed in conjunction with a control system responsive to a parameter, such as the temperature of the lubricant in the sump of the compressor, or to ambient air temperature, to modulate the superheat setting of the electrically operable expansion valve. A control system for such an electrically operable refrigerant expansion valve is disclosed in the co-assigned U.S. Patent 4,067,203 to Behr. The control system disclosed in the Behr patent enabled the precise control of the electrically operated expansion valve so that the evaporator coil could be continuously operated with liquid refrigerant in all parts of the coil under varying load conditions, and yet prevented liquid refrigerant from entering the suction side of the compressor. It will be recognized that when the evaporator coil is maintained in its flooded or wetted state, optimum heat transfer, and thus optimum operating effi-

- 3 - 0230396

ciency, for the refrigeration system results.

Co-assigned U.S. Patent 4,467,613 to Behr et al also addresses the aforementioned shortcomings of the prior art. In the '613 patent, the superheat of the refrigeration system is maintained at a low superheat level so as to maximize the operating efficiency of the refrigeration system, and yet prevent the return of excessive amounts of liquid refrigerant to the compressor. This apparatus includes an electric heater for biasing the thermostatic sensing bulb of the thermostatic expansion valve and a control for the heater which is responsive to a refrigeration system parameter, such as the temperature of the lubricant in the compressor sump, so as to effect an increase in the temperature of the thermostatic bulb above the refrigerant temperature upon an indicated change in the parameter being monitored to, in effect, reduce the superheat setting of the thermostatic expansion valve and to increase the flow of refrigerant through the refrigeration system. Upon sensing another indicated change in the parameter, the heater is de-energized, or at least the heater power is reduced, to effect an increase in the superheat setting of the thermostatic expansion valve and to reduce the flow of refrigerant.

Both the valves disclosed in the Behr U.S. Patent 4,067,203 and Behr et al Patent No. 4,467,613 worked exceedingly well for their intended purposes. However, the various operating conditions and parameters of refrigeration systems are now being measured in some cases with improved accuracy, and these measurements are often recorded by microcomputers. It is now possible, therefore, to control the operation of a refrigeration system using measurements more sensitive than the superheat which has typically been used before. In addition, since various parameters might be of different importances in differing operating conditions, it is now desirable to have a control or a thermostatic expansion valve which is extremely flexible in response.

Other prior art devices, such as are shown in U.S.

patents 3,914,952, 4,362,027, and 4,448,038 to Barbier, have included electrically controlled expansion valves. These devices include a solenoid whose operation is responsive to the temperature or other conditions sensed at various parts of the system. The devices themselves could be improved. For example, the solenoid plunger of these prior art devices tends to take a position as a function of coil pull regardless of variations in flow rate or system pressures. As a result of this insensitivity to these variations, control of the expansion valve is not as accurate or stable as it otherwise could be.

Among the several objects and features of the present ivention may be noted the provision of a magnetic pilot expansion valve system with improved response;

The provision of a magnetic pilot for such a system which has minimal power consumption;

The provision of such a magnetic pilot which has a wide control range and stable control;

The provision of such a magnetic pilot which is adaptable to control a large variety and size range of expansion valves; and

The provision of such a system having an electronically adjustable set point.

Other objects and features of this invention will be in part apparent and in part pointed out hereinafter.

In accordance with this invention, generally stated, a magnetic pilot for an expansion valve of the present invention includes a pilot body having first, second and third ports in fluid communication with one another. The first and second ports are adapted for flow of fluid therebetween, and the second and third ports are adapted to supply a pressure differential to a control element of an expansion valve. An assembly including a valve seat and a plunger are disposed in the fluid path between the first and second ports of the magnetic pilot for regulating a pressure differential supplied to the control element, which pressure differential is substantially independent of changes in fluid pressure at the first and second ports. The regulating assembly includes means for applying a magnetic force to the plunger to oppose the flow of fluid between the first and second ports. The regulating assembly also includes means for electrically setting the magnitude of the magnetic force applied to the plunger. The pressure differential is a function of that magnetic force.

In a second aspect of the present invention, an expansion valve system includes an expansion valve having an inlet port, an outlet port, a passage between the inlet and outlet ports for fluid communication therebetween, and a valve assembly at least partially disposed in the passage between the inlet and outlet ports for controlling the amount of fluid flow between the ports. The valve assemby includes a pressure responsive control element. The expansion valve system also includes a magnetic pilot having means for supplying a regulated pressure differential to the pressure responsive control element of the expansion valve. The pressure differential is substantially independent of changes in fluid pressure at the inlet and outlet ports of the expansion valve.

In a third aspect of the present invention, a method of controlling the flow rate of fluid through an expansion valve or the like includes the steps of developing a regulated pressure differential in an electrically controlled magnetic pilot, applying the regulated pressure differential across a control element of the expansion valve, and opening the expansion valve an amount corresponding to the pressure differential across the control element, whereby flow through the expansion valve is a function of the regulated pressure differential.

Fig. 1 is an elevation of the magnetic pilot and expansion valve system of the present invention;

Fig. 2 is a perspective view showing a controller for the system of Fig. 1;

Fig. 3 is a schematic of a prior art electrically controlled expansion valve;

Fig. 4 is a schematic, similar to Fig. 3, illustrating the electrically controlled expansion valve and magnetic pilot of the present invention;

Fig. 5 is a cross sectional view of a magnetic pilot of the present invention;

Fig. 6 is a cross sectional view of a second embodiment of the magnetic pilot of the present invention;

Fig. 7 is a cross sectional view of the magnetic pilot of Fig. 6 in combination with an expansion valve;

Fig. 8 is a cross sectional view of a third embodiment of the magnetic pilot of the present invention;

Fig. 9 is a chart illustrating the magnetic force applied in the magnetic pilot as a function of the air gap;

Fig. 10 is a chart illustrating the percentage flow through the expansion valve of the present invention as a function of input current to the solenoid of the magnetic pilot; and

Fig. 11 is an electrical schematic which compensates for the non-linearity in response shown in Fig. 10.

Similar reference characters indicate similar parts throughout the several views of the drawings.

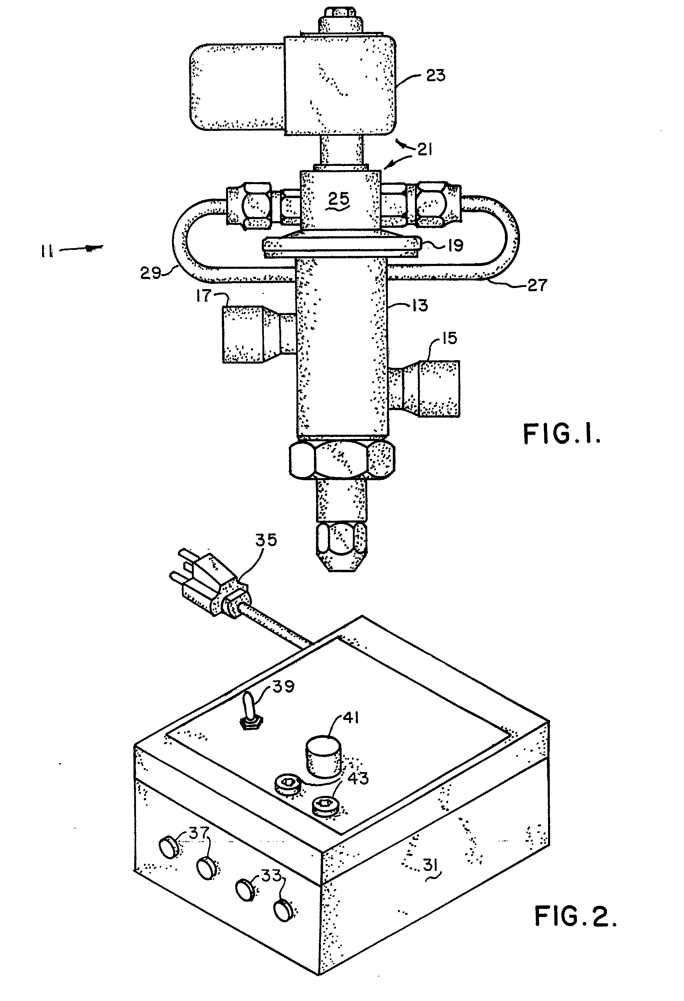

Referring to the drawings (Fig. 1) an electrically controlled expansion valve system 11 of the present invention includes an expansion valve 13 having an inlet port 15 and an exit port 17. The expansion valve shown has a conventional diaphragm control element mounted in a diaphragm housing 19, although the expansion valve could just as easily be a conventional piston-controlled valve. The magnetic pilot 21 in the present invention is mounted above the expansion valve, and includes two main portions. The first is the electrically controlled solenoid 23. The second is the valve body 25 for the pilot itself. The valve body of the pilot is connected by means of two tubes 27 and 29 to the inlet and outlet ports of the expansion valve. As will appear in more detail hereinafter, magnetic pilot 21 supplies a regulated pressure differential to the pressure responsive control element, in this case, the diaphragm, of the expansion valve. Because of the particular construction and placement of the magnetic pilot, this pressure differential is substantially independent of changes in fluid pressure at the inlet and outlet ports 15 and 17 of the expansion valve. This particular pilot can drive refrigeration systems of from 10 to 200 tons with suitable expansion valves, although systems outside this range could also fall within the scope of the present invention.

Solenoid 23 is controlled by means of a suitable controller, such as controller 31 (Fig. 2). Controller 31 includes two terminals 33 for supplying current to solenoid 23. That current is obtained from a suitable power source by a power supply cord 35, and is suitably transformed and regulated by controller 31. A pair of terminals 37 is provided for those instances in which it is desired to control the magnetic pilot using an external controller such as a microcomputer. In this latter case, controller 31 simply supplies and regulates the current in an amount determined by the voltage across remote input terminals 37. A two-position switch 39 is provided to chose between local or remote control of the current provided to the solenoid of the magnetic pilot. Normally, one would control the magnetic pilot using the remote inputs. However, for experimental purposes or the like, it might be desired to control the pilot manually. Manual control knob 41 and two test terminals 43 are provided for this purpose.

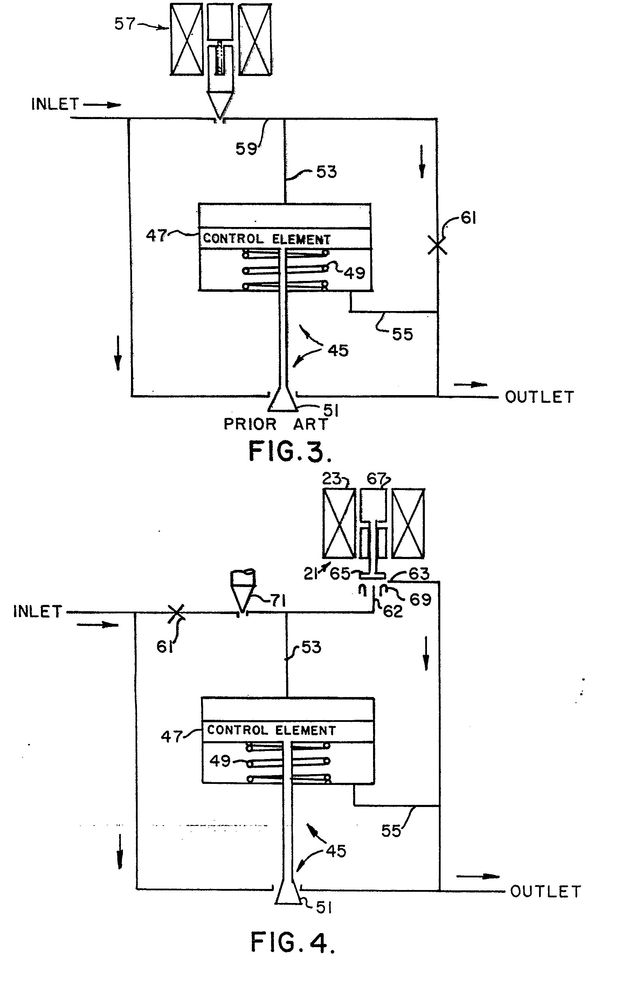

Some basic differences between expansion valve system 11 of the present invention and the prior art systems contained in the aforementioned patents to Barbier are illustrated by comparing Figs. 3 and 4. In Fig. 3, an expansion valve 45 has a control element 47 (which can be a piston or a diaphragm) which is biased upwardly by a compression spring 49. When the control element is in its upwardly biased position, a valve element 51 of the expansion valve is in its closed position. The position of valve element 51 is controlled by the pressure differential across control element 47. This pressure differential is supplied to the control element by means of two passages 53 and 55. The electrically controlled pilot 57 of the prior art device is disposed in a passage 59 connected to the inlet of the expansion valve. A fixed restrictor 61 is disposed downstream from passage 53 in passage 59, so that the pressure differential across the control element 47 is a function both of the fixed restrictor and of the position of the valve member in pilot valve 57. Passage 55 is connected directly to the outlet of the main expansion valve, so that the pressure differential across control element 47 is related to the position taken by the valve member of electrically controlled pilot 57 and the outlet pressure of the expansion valve. In the prior art system of Fig. 3, the pressure differential across the control element 47 is not the same as the pressure differential across the electrically controlled pilot 57. As a result, variations in the inlet or outlet pressures can cause movement of the expansion valve element 51.

In contrast to the system of Fig. 3, the present invention utilizes a magnetic pilot which is disposed directly across the control element of the expansion valve 45. Magnetic pilot 21 has its inlet port 62 connected directly to passage 53 and its exit port 63 connected directly to passage 55. That is, the valve element 65 of magnetic pilot 21 directly controls the pressure differential across the control element 47 of the expansion valve. As can be seen from Fig. 4, valve element 65 is connected to the plunger 67 of solenoid 23. Valve element 65, when closed, sits on an annular valve seat 69 which encircles the valve element inlet port 62. As a result of this configuration, a small change in the position of valve element 65 results in a large change in the pressure drop across the valve element. Fixed restrictor 61 in the present invention is disposed upstream of the magnetic pilot, and in one embodiment of the present invention, a liquid stop check valve 71 is provided to mechanically close off flow of fluid through the magnetic pilot when the solenoid is de-energized. These structural differences result in a significant functional advantage of the expansion valve system of the present invention over that of the prior art. The plunger of the prior art device tends to take a position as a function of coil pull, regardless of flow or system pressures. With the present invention, however, the pilot plunger provides a force as a function of coil pull. The position of the plunger varies as required to maintain a constant pressure differential for a given coil current. An increase in the pressure differential across the pilot port tends to lift the valve member 65 and thereby restore the original pressure differential. As a direct result, the position of the valve element 51 of the expansion valve in the present invention is little affected by changes in valve inlet pressure or outlet pressure, which results in accurate, stable control of the system. In addition, because of the design of the valve element 65 and valve seat 69 in the magnetic pilot, the plunger movement, when the pressure is being modulated, is extremely small. A small movement of the plunger results in a relatively large change in the flow through the pilot. This minimizes the variable of plunger force versus stroke typical of solenoid-type valves. As a result, the pressure set point is directly and linearly proportional to the power supplied to the coil. Thus, magnetic pilot 21 is actually a pressure regulator which maintains its set point pressure differential (which is set by the solenoid coil current) and compensates for any change in system conditions.

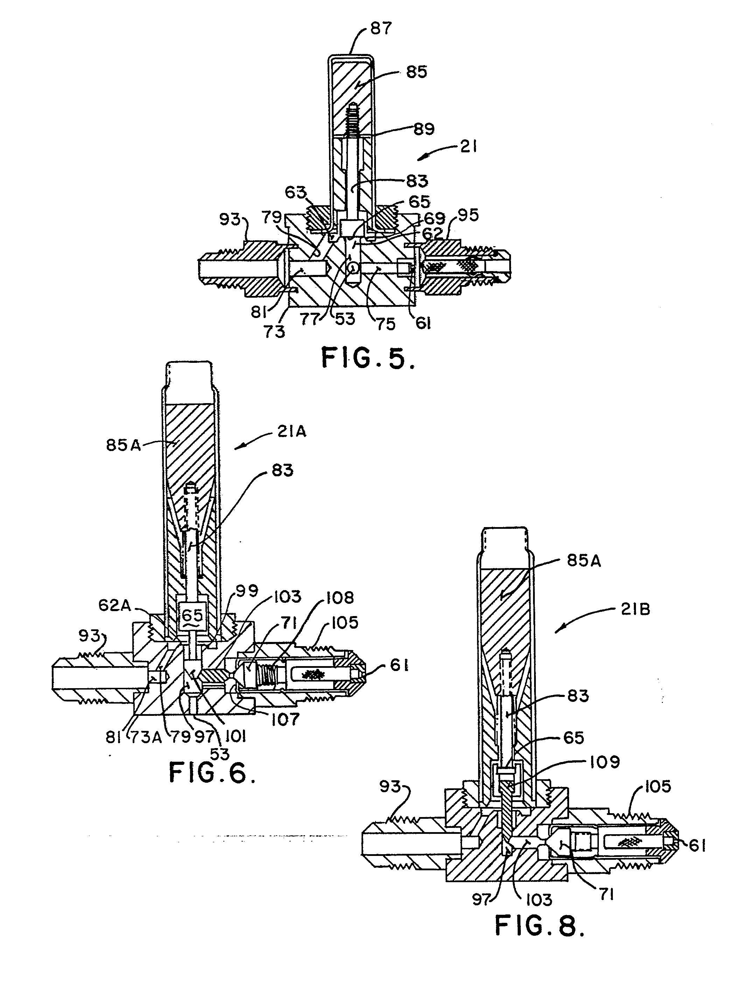

Magnetic pilot 21 (Fig. 5) includes a valve body 73 having a number of passages 53,75,77,79, and 81 therein. Passage 75 extends from fixed restrictor 61 to passage 77. Passage 53 is in fluid communication and opens into passage 77 and connects that passageway with the upper side of control element 47 of the expansion valve. Passage 77 terminates at its upper end in inlet port 62 of the pilot valve itself. Inlet **port** 62 is surrounded by generally annular valve seat 69. Disposed above valve seat 69 is valve element 65, which is integral with plunger 83 of solenoid 23. Plunger 83 is secured at its upper end to a magnetically movable member 85 which is enclosed in a housing 87. Housing 87 is secured at its lower end to valve body 73. An air gap 89 of approximately 0.03 inch exists between magnetically movable member 85 and a stationary member 91 disposed annularly around plunger 83, which stationary member does not move with respect to housing 87, although it is contained therein. Even when the plunger is in its lowest position as shown in Fig. 5, the plunger air gap 89 is mechanically prevented from completely closing because the valve element seats on valve seat 69 before the air gap is closed. This arrangement allows the modulation of the pressure to occur at a small air gap, which is a very high force range, while preventing the plunger from latching closed. As a result of the very short stroke of the pilot valve and the fact that the air gap is mechanically held open, the variable of plunger force as a function of the air gap is minimized.

Pilot 21 does not include means for biasing the plunger in one direction or the other. As a result, the only significant forces affecting the position of the valve element with respect to the valve seat are the force exerted by the flow of current through the solenoid coil and the magnetic force resulting from the pressure differential across valve element 65 itself.

Outlet or exit port 63 is disposed in valve body 53 adjacent valve seat 69. Exit port 63 is connected by passage 79 to passage 81. Passage 81 is in fluid communication with a coupling 93 by means of which tube 29 (Fig. 1) connects the magnetic pilot to the outlet side of the expansion valve. A similar coupling 95 is provided to permit the attachment of tube 27 to the magnetic pilot. Coupling 95, like coupling 93, has an interior bore. In the case of coupling 95, the interior bore is in fluid communication with fixed restrictor 61.

Magnetic pilot 21 uses the magnetic force generated by the solenoid coil and plunger 83 to modulate a controlled pilot pressure across valve element 65. The pilot pressure on the high side of valve member 65 is directed by means of passage 53 to the signal side of the control element 47 (the piston or diaphragm) of the expansion valve. The exhaust or outlet side of pilot 21 is connected by means of passages 79, 81, coupling 93, tube 29 and passage 55 to the outlet side of the control element 47 so that the pilot controls the pressure differential across the expansion valve control element. This pressure differential is used to drive the expansion valve through its opening pressure gradient, which results in an electrically applied signal being translated into a percentage of valve opening. The combination of the magnetic force driving the plunger downwardly and the force generated by the exhaust or outlet pressure of the pilot act downwardly through pilot valve element 65. These forces are offset by the fluid pressure acting upwardly through the valve inlet port 62. The plunger and valve element move in response to this force of balance, which results in a controlled pressure that is proportional to the plunger force.

An alternative embodiment of magnetic pilot 21 is shown in Fig. 6 and labeled 21A. This pilot differs from the one shown in Fig. 5 in that it includes check valve 71 to mechanically close the fluid flow path when the solenoid is de-energized. It also differs in that the air gap is not horizontal, but rather is angled. This latter feature, in some applications, could result in even more linear operation of the pilot than is achieved with the embodiment of Fig. 5, although it has been discovered that the embodiment of Fig. 5, even though less complex, has a very linear response. Turning in more detail to pilot 21A, the valve body of pilot 21A (labeled 73A) has its controlled pressure port 53 extending downwardly from a passage 97 which terminates at its upper extent in valve seat 99. Solenoid plunger 83, in this embodiment, is again integral with valve element 65, but a pin 101 extends integrally down from valve element 65 in passage 97. When the solenoid is energized to drive plunger 83 downwardly, pin 101 is driven downwardly in passage 97 where it strikes a check valve connecting rod 103. This movement forces check valve 71 open, thereby permitting fluid flow from the inlet side of the expansion valve into passage 97. More particularly, tube 27 (Fig. 1) is connected by a coupling 105, which contains fixed restrictor 61 in the upstream part of an internal bore, to check valve 71. When check valve 71 is open as described above, a fluid path exists between fixed restrictor 61 and passageway 97. When the solenoid is de-energized on the other hand, the movable element of check valve 71 moves back into the position shown in Fig. 6 in which it seats against a check valve seat 107, thereby stopping flow of fluid to passage 97. Check valve 71 can be biased in any conventional manner, such as by a compression spring 108. When the solenoid coil is de-energized, the plunger tends to be forced by the fluid pressure to its uppermost position, allowing the spring-loaded check valve to move to its normally closed position. This shuts off all flow through the pilot. When the coil is energized, the plunger forces the ramped surface on the end of the plunger pin past the check valve connecting rod 103. This action mechanically strokes check valve 71 open. The high pressure actuating fluid enters the pilot through fixed diameter orifice 61, past check valve 71, and into the port area encircled by plunger seat 99 by way of passage 97. The modulation of the pressure differential then proceeds as described above.

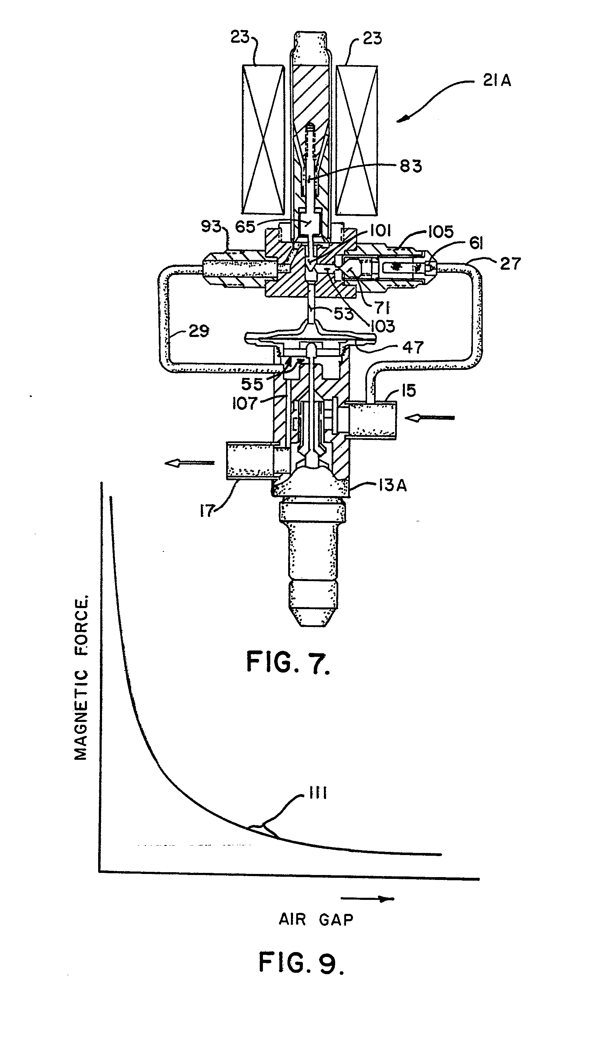

The magnetic pilot of Fig. 6 is shown in Fig. 7 in combination with an expansion valve 13A having a diaphragm for a control element. It is more clearly seen in this Figure that high pressure fluid from inlet port 15 is supplied by tube 27 to fixed restrictor 61. When check valve 71 is forced open as described above by pin 101 and check valve connecting rod 103, the pilot pressure which is regulated by magnetic pilot 21 is supplied by way of passage 53 to the control side of diaphragm 47. The exhaust side of the magnetic pilot is connected by tube 29 to the other side of diaphragm 47, so that the pressure differential across diaphragm 47 is exactly the same as that across valve element 65 in the magnetic pilot. Tube 29 is also connected through a passage 107 to outlet port 17 of the expansion valve. Expansion valve 13 is otherwise conventional and not described in detail herein. Of course for applications requiring a heavy duty expansion valve, diaphragm 47 could be replaced by a piston control element, as is well known in the art. When solenoid 23 is de-energized, the forces on plunger 83 cause the plunger to be forced upwardly, which results in check valve 71 being biased to its closed position shown in Fig. 7.

Another embodiment of the magnetic pilot of the present invention, labelled 21B, is shown in Fig. 8. This embodiment is very similar to that of Fig. 6, but instead of having fixed pin 101 attached to the plunger, it has a floating plunger pin 109, which floats in passage 97. The plunger, when the solenoid is energized, provides a hammer blow action to drive the pin down and open check valve 71. The floating action allows plunger 83 to move freely without the drag otherwise resulting from the check valve connecting rod 103.

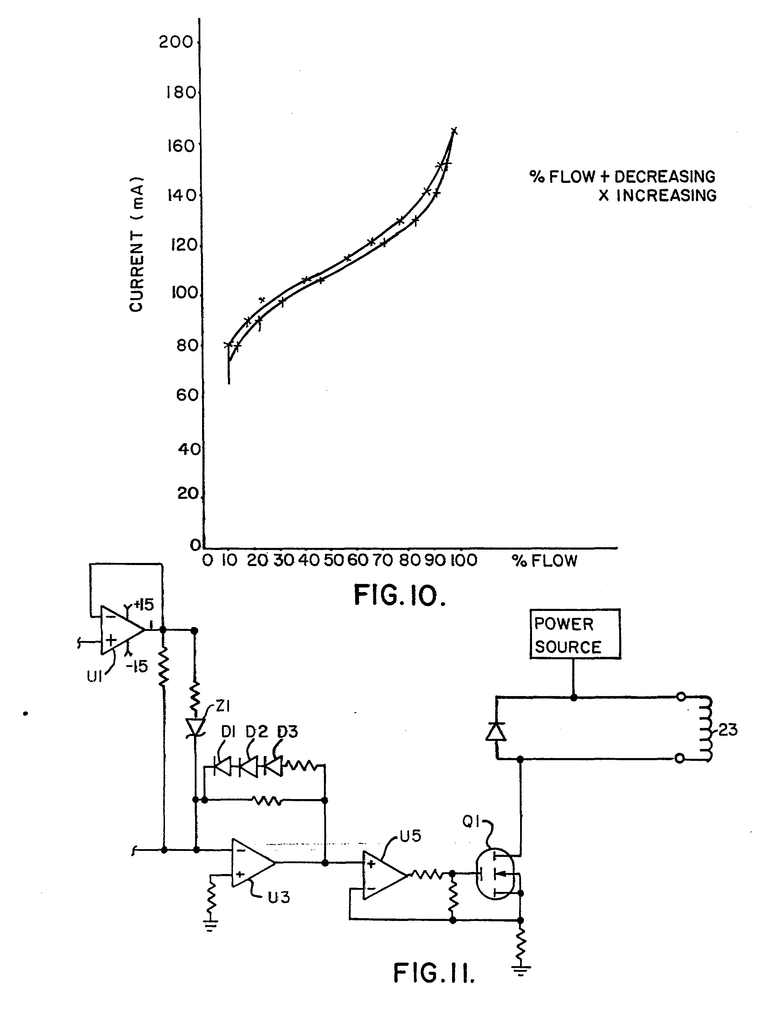

As is well known, the magnetic force applied by a solenoid is a function of the air gap between movable and stationary parts of the plunger. The magnitude of this force as a function of the air gap is illustrated in Fig. 9. With the present configuration, it is possible to operate in a fairly linear portion of the air gap versus force curve, which portion is labeled 111 in Fig.9. Since the stroke is limited to about 0.00254 cm (.002 inch) the change in magnetic force throughout the stroke is extremely linear and fairly constant. Furthermore, the percentage flow through expansion valve 13 is also a fairly smooth function of the current applied to solenoid 23. The curve representing this flow as a function of solenoid current is shown in Fig. 10. Throughout most of its operating range, the percentage flow is a fairly linear function of solenoid current and exhibits only about five percent hysteresis. That is, as solenoid current is increased, the percentage flow through the expansion valve increases proportionally. If it is desired to have an even more linear response than that shown in Fig. 10, a circuit such as shown in Fig. 11 can be used to change the current supplied to the solenoid 23 to compensate for the non-linearity in Fig.10. This particular circuit has two break points at which the slope of the output is changed. One break point is controlled by an operational amplifier U1 in combination with a zener diode Z1, while the second is controlled by a second operational amplifier U3, having three diodes D1, D2, and D3 in a feedback loop. At each break point, the output of amplifier U3 as a function of its input changes slope so that the current actually supplied to the solenoid coils is changed sufficiently to give a linear response of percentage flow through the expansion valve with respect to the input signal. The output of amplifier U3 is supplied through a third operational amplifier U5 to a MOSFET Q1 which controls the amount of current which flows through coil 23.

It should also be noted that this particular construction eliminates hysteresis which otherwise would result from variation in the coil temperature. Moreover, use of a controlled current supply further enhances valve stability.

In view of the above, it will be seen that the various objects and features of this invention are achieved and other advantageous results obtained.

As various changes could be made in the above constructions and methods without departing from the scope of the invention, it is intended that all matter contained in the above description and shown in the accompanying drawings shall be interpreted as illustrative and not in a limiting sense.

CLAIMS:

1. A magnetic pilot for an expansion valve and the like comprising:

a pilot body having first, second, and third ports in fluid communication with each other, the first and second ports being adapted for flow of fluid therebetween and the second and third ports being adapted to supply a pressure differential to a control element of the expansion valve; and

means including a valve seat and a plunger disposed in the fluid path between the first and second ports for regulating the pressure differential supplied to the control element, said pressure differential being substantially independent of changes in fluid pressure at the first and second ports;

said regulating means including means for applying a magnetic force to the plunger to oppose the flow of fluid between the first and second ports;

said regulating means also including means for electrically setting the magnitude of the magnetic force applied to the plunger, the pressure differential being a function of said magnetic force.

2. The magnetic pilot as set forth in claim 1 wherein the second and third ports are disposed on opposite sides of the valve seat so that the pressure differential across the plunger is proportional to the pressure differential applied to the expansion valve control element.

3. The magnetic pilot as set forth in claim 2 wherein the pressure differential across the plunger is substantially the same as the pressure differential applied to the expansion valve control element.

4. The magnetic pilot as set forth in claim 1 wherein the magnetic force applied to the plunger is essentially independent of the pressure applied to the plunger by the moving fluid.

5. The magnetic pilot as set forth in claim 1 wherein the plunger includes a valve member having a generally planar surface which is movable with the plunger into contact with the valve seat.

6.      The magnetic pilot as set forth in claim 5 wherein the fluid communication between the first and second ports is through a passageway having a cross sectional area generally equal to the cross sectional area of the valve seat, said valve seat being disposed around said passageway so as not to independently restrict flow of fluid therethrough.

7.      The magnetic pilot as set forth in claim 1 wherein the range of movement of the plunger is such that the magnetic force applied thereto remains generally the same throughout said range.

8.      The magnetic pilot as set forth in claim 7 wherein the range of movement of the plunger is approximately 0,00254 cm (0.002 inches).

9.      The magnetic pilot as set forth in claim 1 further including means disposed between the first port and the other ports for restricting the flow of fluid therebetween.

10.     The magnetic pilot as set forth in claim 1 wherein the plunger has associated therewith an air gap which gap is a function of the longitudinal distance between the plunger and the valve seat, wherein the plunger and valve seat are so disposed as to mechanically prevent the air gap from completely closing even when the plunger is fully seated on the valve seat.

11.     The magnetic pilot as set forth in claim 10 wherein the magnetic force applied to the plunger remains essentially the same over the range of possible widths of the air gap.

12.     The magnetic pilot as set forth in claim 1 further including a check valve disposed between the first and second ports for preventing flow therebetween and means associated with the plunger for opening the check valve when the magnetic force is applied to the plunger.

13.     The magnetic pilot as set forth in claim 1 wherein the only force specific to the pilot significantly tending to oppose the force exerted by the pressure on the plunger is the applied magnetic force.

14. The magnetic pilot as set forth in claim 1 wherein the electrically setting means includes means for changing the current to the magnetic force means to change the magnetic force applied to the plunger.

15. The magnetic pilot as set forth in claim 14 wherein the flow rate governed by the pilot is a nonlinear function of the current supplied to the magnetic force means, said electrically setting means further including means for compensating for said non-linearity.

16. An expansion valve system or the like comprising:

an expansion valve having an inlet port, an outlet port, a passage between the inlet and outlet ports for fluid communication therebetween, and a valve assembly at least partially disposed in the passage between the inlet and outlet ports for controlling the amount of fluid flow between said ports, said valve assembly including a pressure responsive control element; and

a magnetic pilot including means for supplying a regulated pressure differential to the pressure responsive control element, said pressure differential being substantially independent of changes in fluid pressure at the inlet and outlet ports of the expansion valve.

17. The expansion valve system as set forth in claim 16 wherein the magnetic pilot includes a pilot body having an entrance port in fluid communication through a passageway with an exit port and a control port also in fluid communication with said passageway, a valve seat disposed along said passageway, and a magnetically operable plunger which is operable in combination with the valve seat to oppose flow of fluid through the passageway.

18. The expansion valve system as set forth in claim 17 wherein the entrance port of the pilot is in direct fluid communication with the inlet port of the expansion valve and the exit port of the pilot is in direct fluid communication with the outlet port of the expansion valve.

19. The expansion valve system as set forth in claim 17 wherein the exit port and control port of the pilot supply the pressure differential to the control element of the expansion valve.

20. The expansion valve system as set forth in claim 19 wherein the exit and control ports of the pilot are disposed on opposite sides of the valve seat so that the pressure differential across the plunger is substantially the same as the pressure differential supplied to the control element.

21. The expansion valve system as set forth in claim 16 further including means for electrically setting the pressure differential supplied to the control element.

22. The method of controlling the flow rate of fluid through an expansion valve or the like comprising the steps of:

developing a regulated pressure differential in an electrically controlled magnetic pilot;

applying the regulated pressure differential across a control element of the expansion valve; and

opening the expansion valve an amount corresponding to the pressure differential across the control element, whereby flow through the expansion valve is a function of the regulated pressure differential.

23. The method as set forth in claim 22 wherein the pressure differential is developed across a magnetically controlled plunger.

24. The method as set forth in claim 23 wherein the regulating step includes the step of applying a magnetic force to the plunger which opposes the force thereon generated by the pressure differential, which magnetic force is substantially independent of plunger position.

25. The method as set forth in claim 24 wherein the magnetic force is set by an electrical current and the flow rate of fluid through the expansion valve is a substantially linear function of the electrical current.

FIG.1.

FIG.2.

0230396

2/5

INLET →

57

47 CONTROL ELEMENT

49

59

53

61

55

45

51

PRIOR ART

OUTLET

FIG.3.

23  67

21  65  63

INLET →

61

71

62  69

53

47 CONTROL ELEMENT

49

55

45

51

OUTLET

FIG.4.

0230396

FIG.5.

FIG.6.

FIG.8.

FIG. 7.

FIG. 9.

5/5

0230396

% FLOW + DECREASING
X INCREASING

FIG. 10.

FIG. 11.